# EUROPÄISCHE PATENTSCHRIFT

(11) **EP 4 476 428 B1**
(45) Veröffentlichungstag und Bekanntmachung des Hinweises auf die Patenterteilung: **05.11.2025**
(21) Anmeldenummer: 23719351.1
(22) Anmeldetag: 11.04.2023
(51) Int. Cl.: E21D 1/03, B65G 65/23

(54) **VORRICHTUNG ZUR ENTLEERUNG VON FÖRDERKÜBELN BEIM ABTEUFEN VON SCHÄCHTEN**
DEVICE FOR EMPTYING CONVEYING BUCKETS DURING THE SINKING OF SHAFTS
DISPOSITIF POUR VIDER DES GODETS DE TRANSPORT LORS DU FONÇAGE DE PUITS

(30) Priorität: 08.04.2022 DE 102022108661
(43) Veröffentlichungstag der Anmeldung: 18.12.2024
(73) Patentinhaber: Herrenknecht AG, 77963 Schwanau (DE)
(72) Erfinder: RENNKAMP, Patrick, 77933 Lahr (DE)
(74) Vertreter: Klickow & Wetzel PartGmbB
(86) Internationale Anmeldenummer: PCT/EP2023/059465
(87) Internationale Veröffentlichungsnummer: WO 2023/194627

(56) Entgegenhaltungen:
- DE-A1- 1 922 609
- DE-B- 1 081 396
- GB-A- 830 231
- US-A- 1 254 997

## Beschreibung

Die Erfindung betrifft eine Vorrichtung zum Entleeren eines Förderkübels von beim Abteufen eines Schachts gelösten Gestein/Boden mit einer Schurre zum Abfördern des aus dem Förderkübel entleerten Gestein/Boden/Material, die mittels eines Aktuators linear zwischen einer Förderkübeltransportstellung und einer Förderkübelentleerstellung verfahrbar ist.

Beim Abteufen eines Schachts im Boden ist es notwendig, das auf der Schachtsohle gelöste Gestein/den gelösten Boden aus dem Schacht abzufördern. Hierfür werden als Fördergefäße nach oben offene Förderkübel eingesetzt, die mittels einer Seilwinde als Schachtförderung auf und ab bewegt werden. Beispielsweise kommen Förderkübel mit 7m³ Fördervolumen und einem gefüllten Gesamtgewicht von ca. 20 t zum Einsatz.

Vorteilhaft ist in bekannter Art und Weise, Förderkübel einzusetzen, die mit einer Doppeltrommelwinde (Blair-Winder/double drum Blair-Winder) im Schacht auf und gleichzeitig gegenläufig ab bewegt werden, bei der sich das Gewicht der Seile und Förderkübel ausgleicht und somit Antriebleistung spart.

An der Tagesoberfläche wird eine Doppeltrommelwinde vorgesehen, die einen Antrieb aufweist, der eine erste Trommelwelle antreibt. An der Trommelwelle ist eine erste Trommel angeordnet, auf der ein erstes Förderseil beispielsweise von unten in einer ersten Auf-/Abtrommelrichtung auf-/abtrommelbar ist. Die Trommelwelle ist mit einer zweiten Trommelwelle ggf. über eine Kupplung verbunden, so dass die erste Trommelwelle zusammen mit der zweiten Trommelwelle vom Antrieb rotiert wird. An der Trommelwelle ist eine zweite Trommel angeordnet, auf der ein zweites Förderseil beispielsweise von oben unten in einer zweiten Ab-/Auftrommelrichtung ab-/auftrommelbar ist. Die Trommelrichtungen sind dabei gegenläufig, so dass ein Förderseil aufgetrommelt wird und das andere Förderseil gleichzeitig abgetrommelt wird und umgekehrt, während beide Trommeln und beide Trommelwellen durch den Antrieb in die gleiche Richtung rotiert werden. In ihren jeweiligen temporärem Endstellungen befindet sich ein Förderkübel unten im Schacht, um befüllt zu werden, was hier durch einen Bunker im Füllort dargestellt ist, während sich der andere Förderkübel oben, beispielsweise über Tage, befindet, um im Bereich der so genannten Hängebank entleert zu werden, hier dargestellt durch eine Schurre, über die das/der im Förderkübel befindliche gelöste Gestein/Boden (Material) abgefördert wird.

Als Hängebank werden im Bergbau die Vorrichtungen und Einbauten im Fördergebäude über Tage/im Schacht bezeichnet, die dem Entleeren der Förderkübel dienen.

Aus dem Stand der Technik ist dem Fachmann allgemein aus seinem Fachwissen bekannt, dass im Schacht Führungsseile als Schachtführung gespannt sind, an denen beispielsweise ein Führungsschlitten im Schacht sicher geführt auf und ab fährt. Der Führungsschlitten ist lösbar mit einem Förderseil, beispielsweise über eine lösbare Arretierung verbunden. Der Führungsschlitten wird über das Förderseil im Schacht zusammen mit dem Förderkübel auf und ab bewegt. Am Förderseil ist ein Haken angeordnet, an dem der Förderkübel eingehängt ist, beispielsweise über ein Kettengehänge. Alternativ kann auch ein verschwenkbar am Förderkübel gelagerter Tragbügel eingesetzt werden. Der Förderkübel ist durch das Kettengehänge beweglich/verschwenkbar aufgehängt. Zum Entleeren wird der Förderkübel in einen Bereich oberhalb der Hängebank bewegt. Anschließend wird beispielsweise eine hier als Kippkette bezeichnete Kette (nicht dargestellt) an einem Verbindungselement in Form einer Öse lösbar befestigt. Dann wird der Förderkübel durch Absenken des Förderseils nach unten bewegt und durch die Kippkette um eine horizontale Achse (hier nicht dargestellt) rotiert, also gekippt, wenn diese gespannt ist. Je weiter das Förderseil abgesenkt wird, desto mehr wird der Förderkübel gekippt, bis der gelöste Boden/das gelöste Gestein aus dem Förderkübel durch die Schwerkraft heraus in eine Schurre fällt. Ist der Förderkübel vollständig entleert, wird das Förderseil wieder angehoben und der Förderkübel wieder in die vertikale Ausrichtung überführt. Anschließend ist die Kippkette vom Verbindungselement gelöst und der Förderkübel kann wieder in den Schacht abgesenkt werden.

Aus dem Stand der Technik ist dem Fachmann weiterhin bekannt, dass ein Kübel von Führungsseilen oder -latten innerhalb des Schachtes lose geführt wird. Oberhalb des Schachtes ist beispielsweise eine Kippvorrichtung angeordnet, die im Wesentlichen aus einem Gestell besteht, das eine Verbindungsrutsche und eine rinnenförmige Schurre trägt. Während die Verbindungsrutsche fest auf dem Gestell angeordnet ist, lässt sich die rinnenförmige Schurre um ein Gelenk schwenken, und zwar derart, dass sie einmal in den Förderweg des Kübels eingeschwenkt ist zum anderen eine aus dem Förderweg des Kübels herausgeschwenkte Stellung einnimmt. Das Schwenken erfolgt mit Hilfe eines Arbeitszylinders. In gekippter Stellung wird das im Kübel befindliche Material in die rinnenförmige Schurre und über die Verbindungsrutsche in einen Förderwagen entleert. Das Kippen des Kübels erfolgt, indem ein Haken, der im Bereich der Längsmittelebene der Schurre oberhalb ihrer inneren Bodenfläche sowie im Bereich ihres in den Förderweg des Kübels einschwenkbaren Längenabschnittes angeordnet ist, in eine ringförmige Nut des Kübels eingreift, die zur Mitte des Kübelbodens hin offen ausgebildet ist. Durch Ablassen des Förderseiles wird der Kübel um den durch den Haken gebildeten Schwenkpunkt verschwenkt, bis das Material in die Schurre fließen kann. Anschließend wird der Kübel durch Anheben des Förderseils zurückgeschwenkt und die Schurre aus dem Förderweg verschwenkt.

Das Füllen des Förderkübels auf der Abteufvorrichtung im Schacht dauert beispielsweise ca. 30 sec. Das Entleeren des Förderkübels im Förderturm deutlich länger, beispielsweise ca. 90 bis 180 s.

Weiterhin ist eine weitere Schwierigkeit, dass zum Entleeren des Förderkübels im Förderturm das Förderseil bewegt werden muss, wodurch durch den Aufbau der Doppelwinde auch der im Schacht befindliche Kübel bewegt wird. Dieses führt dazu, dass der unten befindliche Förderkübel während der Zeit des Entleerens nicht befüllt werden kann oder das Entleeren oben und das Füllen unten getrennt voneinander ausgeführt werden müssen.

DE1081396B offenbart verschiedene Vorrichtungen zum Entleeren eines Förderkübels von beim Abteufen eines Schachts von dem in ihm befindlichen gelösten Gestein/Boden. Dabei ist offenbart, dass eine Mechanisierung des Kippvorgangs des Kübels vorteilhaft ist. Zwei Varianten operieren dabei mit dem Anschlagen einer Kette zum Bewirken der Kippbewegung zum Entleeren des Kübels in eine Schurre. Weiterhin sind zwei weitere Ausführungen offenbart, bei der eine Verkippvorrichtung zum Einsatz kommt. Jeweils eine Lösung der beiden Varianten erfordert das Absenken des Förderseils, während die anderen Lösungen kein Bewegen des Förderseils erfordern. Für die Kettenlösungen ist eine um einen Drehpunkt verschwenkbare Schurre zwischen einer Entleerposition und eine Kübeltransportposition offenbart. Hier gelten die zuvor genannten Nachteile. Die Verkippvorrichtung weist jeweils einen Kolben auf, der mit einem Absetzstuhl als Formaufnahme für den Kübel um einen Drehpunkt drehbar verbunden ist. Weiterhin ist der Kolben mit einer Seite der Schurre an ihrer oberen Seite verschwenkbar verbunden, so dass die Schurre zusammen mit dem Ausfahren und Verschwenken des Zylinders mit angehoben oder verschwenkt wird. Die Schurre weist beispielsweise an ihrem oberen Ende eine Aufsetzkippe auf, die aus einem gabelförmigen Gerüst mit einem Kopfstück zur Aufnahme des Kübels besteht. Durch das Ausfahren und Verschwenken des Kolbens wird der Kübel in den Absetzstuhl bewegt. Anschließend wird der Absetzstuhl mit dem Kübel durch weiteres Verschwenken bzw. Ausfahren um das Drehgelenk gedreht, in die Aufsetzkippe verfahren und entleert. Anschließend wird der Absetzstuhl mit dem Kübel zurückgedreht, indem der Kolben wieder eingefahren wird. Mit dem Bewegen des Kolbens wird die Schurre angehoben und in die Entleerposition bewegt.

Aufgabe der Erfindung ist, das Entleeren der Förderkübel im Förderturm zu verbessern, damit die Entleerzeit reduziert wird und das Förderseil nicht mitbewegt werden muss.

Gelöst wird die Aufgabe erfindungsgemäß gemäß Patentanspruch 1. Weitere Detaillösungen sind durch die Unteransprüche definiert.

Hierdurch wird erreicht, dass sich die Kübelumlaufzeiten deutlich reduzieren lässt, und der Betrieb wesentlich automatischer und sicherer abläuft.

Insbesondere sieht die erfindungsgemäße Lösung vor, dass ein Aufnahmeelement für den Förderkübel vorgesehen ist, das zum Herstellen einer haltenden Verbindung zwischen Schurre und Förderkübel eingerichtet ist, dass das Aufnahmeelement um eine Drehachse drehbar an der Schurre angeordnet ist, so dass das Aufnahmeelement zwischen einer Aufnahmeposition und einer Entleerposition mittels eines zwischen der Schurre und dem Aufnahmeelement angeordneten Aktuators verschwenkbar ist.

Das Verkippen des Förderkübels ohne ein Bewegen des Förderseils wird hier auf einfache Weise erreicht, so dass der untere Förderkübel befüllt werden kann, während der obere Förderkübel entleert wird. Weiterhin kann auf diese Weise einfach eine Automatisierung des Entleerens des Förderkübels erreicht werden, besonders als mannloser Betrieb.

Eine weitere Lehre der Erfindung sieht vor, dass das Aufnahmeelement einen Rotationsabschnitt aufweist und einen Eingriffabschnitt, mit einem Verbindungsabschnitt des Förderkübels aufweist, bevorzugt in Form wenigstens eines Vorsprungelements, beispielsweise in Form eines Gabelelements oder Forkenelements.. Es hat sich gezeigt, dass hierdurch eine schnell lösbare aber sichere Verbindung bereitgestellt werden kann.

Eine weitere Lehre der Erfindung sieht vor, dass der Rotationsabschnitt mittels eines Aktuators, bevorzugt einem Hydraulikzylinder, verschwenkbar ist. Hierdurch ist eine einfaches und schnelles sowie sicheres

Eine weitere Lehre der Erfindung sieht vor, dass die Schurre wenigstens zweiteilig aufgebaut ist, wobei ein Teil, beispielsweise dem oberen Schurrenteil, gegenüber dem anderen Teil, beispielsweise der Schurrenbasis, relativ verfahrbar ist. Dabei ist vorteilhaft, dass die Relativbewegung mittels eines Aktuators, bevorzugt einem Hydraulikzylinder, bewirkbar ist. Es hat sich gezeigt, dass hierdurch ein einfaches und sicheres Verfahren der Schurre in den Förderweg des Förderkübels und aus diesem wieder heraus bewirkbar ist.

Eine weitere Lehre der Erfindung sieht vor, dass Förderseil des Förderkübels beim Verschwenken des Aufnahmeelements im Wesentlichen nicht ausgelenkbar ist.

Eine weitere Lehre der Erfindung sieht vor, dass der Förderkübel um mehr als 90 Grad verschwenkbar ist.

Eine weitere Lehre der Erfindung sieht vor, dass der Förderkübel verschwenkbar ist, bis er parallel zum Boden der Schurre ist.

Eine weitere Lehre der Erfindung sieht vor, dass eine Drehvorrichtung vorgesehen ist, mit der die Schurre und/oder das Aufnahmeelement horizontal zwischen zwei Aufnahmepositionen oder Entleerpositionen verschwenkbar ist. Hierdurch ist es auf einfache Weise möglich, mit einer erfindungsgemäßen Vorrichtung zwei separate Förderkübel nacheinander zu entleeren.

Nachfolgend wird die Erfindung anhand eines bevorzugten Ausführungsbeispiels mithilfe einer Zeichnung näher erläutert. Dabei zeigen
- Fig. 1: einen Förderkübel mit Führungsschlitten in Seitenansicht mit einem Verbindungselement für die erfindungsgemäße Vorrichtung,
- Fig. 2: eine schematische Darstellung einer Doppeltrommelförderanlage mit zwei Förderkübeln und einem Füllort im Bereich einer temporären Schachtsohle und einem Entleerungsort Übertage mit einer erfindungsgemäßen Vorrichtung,
- Fig. 3: eine erfindungsgemäße Vorrichtung in räumlicher Darstellung,
- Fig. 4: die erfindungsgemäße Vorrichtung in Seitenansicht mit frei hängendem Förderkübel,
- Fig. 5: die erfindungsgemäße Vorrichtung in Seitenansicht mit verbundenem Förderkübel,
- Fig. 6: die erfindungsgemäße Vorrichtung in Seitenansicht mit gekipptem Förderkübel,
- Fig. 7: die erfindungsgemäße Vorrichtung in Seitenansicht mit weiter gekipptem Förderkübel, und
- Fig. 8: eine schwenkbare Ausführungsform der erfindungsgemäßen Vorrichtung mit Förderkübeln.

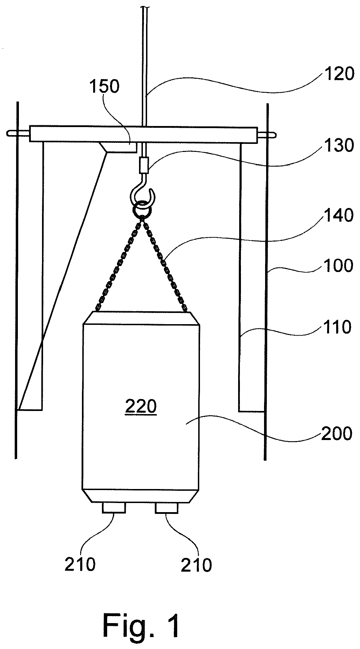

Fig. 1 zeigt einen Förderkübel 200 zum Einsatz mit einer erfindungsgemäßen Vorrichtung 10 zum Entleeren eines Förderkübels von beim Abteufen eines Schachts. Im Schacht (nicht dargestellt) sind Führungsseile 100 als Schachtführung gespannt, an denen beispielsweise ein Führungsschlitten 110 im Schacht sicher geführt auf und ab fährt. Andere Schachtführungen wie Schienen oder dgl. sind ebenfalls möglich.

Der Führungsschlitten 110 ist lösbar mit einem Förderseil 120, beispielsweise über eine lösbare Arretierung 150 verbunden.

Der Führungsschlitten 110 wird über das Förderseil 120 im Schacht zusammen mit dem Förderkübel 200 auf und ab bewegt.

Am Förderseil 120 ist ein Haken 130 angeordnet, an dem der Förderkübel 200 eingehängt ist, beispielsweise über ein Kettengehänge 140. Alternativ kann auch ein verschwenkbar am Förderkübel 200 gelagerter Tragbügel eingesetzt werden. Der Förderkübel 200, 200' ist durch das Kettengehänge 140 beweglich/verschwenkbar aufgehängt. Er weist an seiner Unterseite ein Verbindungselement 210 auf, in das ein Aufnahmeelement 30 eingreifen kann.

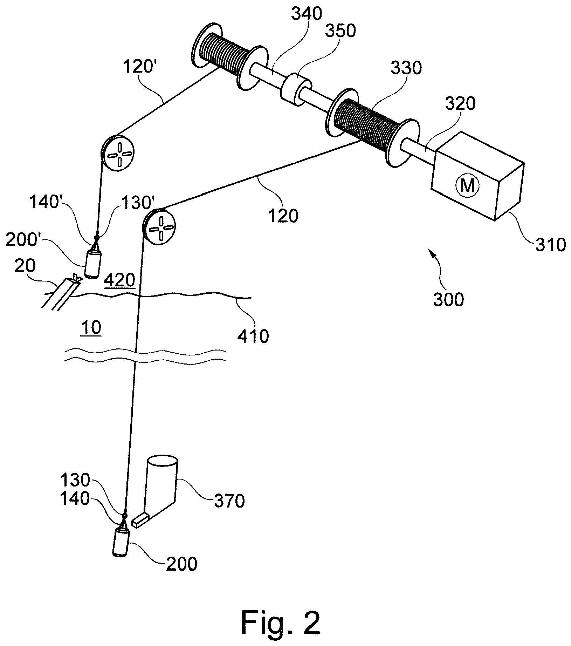

Fig. 2 zeigt eine Förderanlage 500 mit einer Doppeltrommelwinde 300 mit der erfindungsgemäßen Vorrichtung 10 zum Entleeren eines Förderkübels 200, 200' beim Abteufen eines Schachts. Die hier schematisch beispielsweise an der Tagesoberfläche 410 dargestellte Doppeltrommelwinde 300 weist einen Antrieb 310 auf, der eine erste Trommelwelle 320 antreibt. An der Trommelwelle 320 ist eine erste Trommel 330 angeordnet, auf der ein erstes Förderseil 120 beispielsweise von unten in einer ersten Auf-/Abtrommelrichtung auf-/abtrommelbar ist. Die Trommelwelle 320 ist mit einer zweiten Trommelwelle 340 ggf. über eine Kupplung 350 verbunden, so dass die erste Trommelwelle 320 zusammen mit der zweiten Trommelwelle 340 vom Antrieb 310 rotiert wird. An der Trommelwelle 340 ist eine zweite Trommel 360 angeordnet, auf der ein zweites Förderseil 120' beispielsweise von oben unten in einer zweiten Ab-/Auftrommelrichtung ab-/auftrommelbar ist. Die Trommelrichtungen sind dabei gegenläufig, so dass ein Förderseil 120, 120' aufgetrommelt wird und das andere Förderseil 120', 120 gleichzeitig abgetrommelt wird und umgekehrt, während beide Trommeln 330, 360 und beide Trommelwellen 320, 340 durch den Antrieb 310 in die gleiche Richtung rotiert werden.

In ihren jeweiligen temporärem Endstellungen befindet sich ein Förderkübel 200 unten im Schacht, um befüllt zu werden, was hier durch einen Bunker 370 im Füllort dargestellt ist, während sich der andere Förderkübel 200' oben, beispielsweise über Tage, befindet, um im Bereich der so genannten Hängebank entleert zu werden, hier dargestellt durch eine Schurre 20 der erfindungsgemäßen Vorrichtung 10, auf die das/der im Förderkübel 200, 200' befindliche gelöste Gestein/Boden 400 entleert und anschließend abgefördert wird.

Als Hängebank werden im Bergbau die Vorrichtungen und Einbauten im Fördergebäude über Tage/im Schacht bezeichnet, die dem Entleeren der Förderkübel 200, 200' dienen.

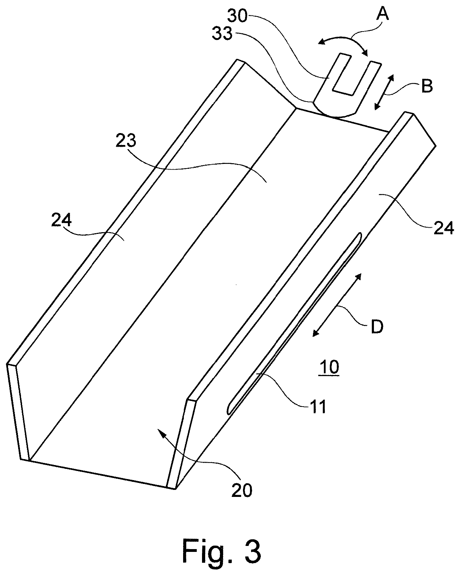

Fig. 3 zeigt eine erfindungsgemäße Vorrichtung 10 mit einer linear verschiebbaren Schurre 20 mit einem Aufnahmeelement 30 an der Spitze.

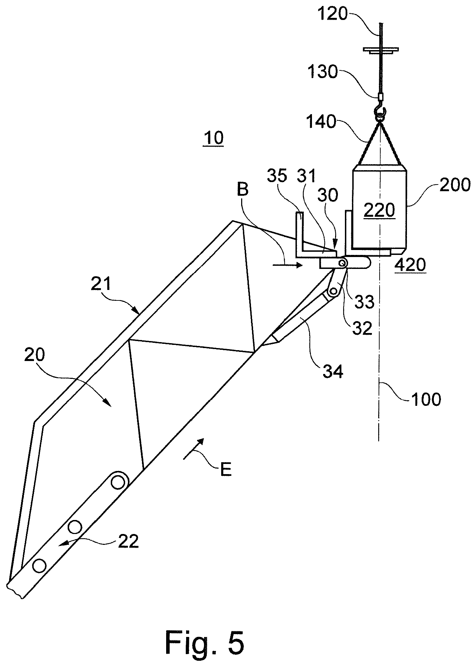

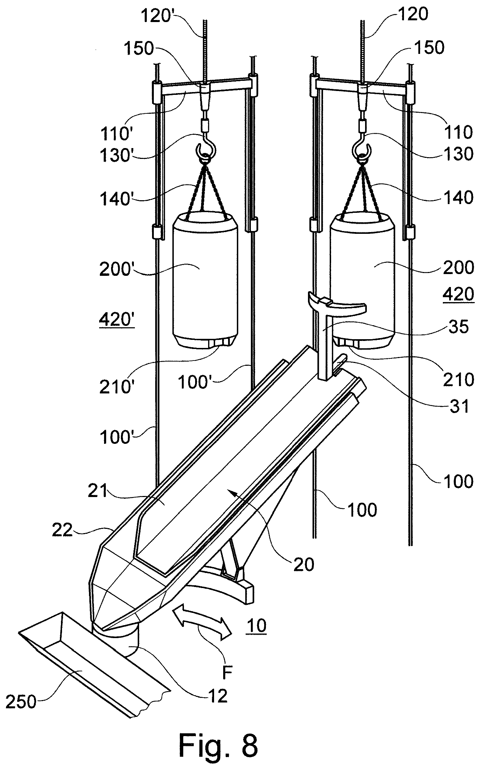

Bevorzugt ist die Schurre 20 wenigstens zweigeteilt in ein oberes Schurrenteil 21 und eine Schurrenbasis 22. Besonders bevorzugt ist das obere Schurrenteil 21 gegenüber der Schurrenbasis 22 beweglich ausgeführt. Dieses kann in Richtung der Längsachse der Schurre 20 (Pfeilrichtung E in Fig. 5), beispielsweise mit einem Aktuator (nicht dargestellt), erfolgen. Alternativ oder zusätzlich kann das obere Schurrenteil 21 gegenüber der Schurrenbasis 22 verschwenkt werden (nicht dargestellt), so dass mit einer Schurre 20 mehrere parallele Aufnahmepositionen 420, 420' wie beispielsweise in Fig. 8 dargestellt, mit einer Schurre verbunden werden können.

Das Aufnahmeelement 30 weist bevorzugt einen Eingriffabschnitt auf, bevorzugt in Form eines Vorsprungelements 31, das beispielsweise wie eine Gabel/Forke ausgeführt ist. Dieser kann beispielsweise in wenigstens ein Verbindungselement 210 beispielsweise am Boden des Förderkübels 200 einführbar sein, um der Förderkübel 200 zu greifen und durch Bewegen des Aufnahmeelements 30 im Raum zu bewegen, beispielsweise durch Rotieren oder Kippen des Aufnahmeelements 30 mittels einem Aktuator 34.

Weiterhin weist das Aufnahmeelement 30 eine beispielsweise rechtwinklig zum Vorsprungelement 31 und beispielsweise an dessen hinteren Ende angeordnetes Auflageelement 35 vorgesehen, gegen dass eine Seitenwand 210 des Förderkübels 200 zum Anliegen kommt, wenn das Aufnahmeelement 30 vollständig in das Verbindungselement 210 eingegriffen hat. Das Auflageelement 35 ist dabei bevorzugt analog zur Biegung der Seitenwand 220 des Förderkübels 200 gebogen, wie dieses in Fig. 8 dargestellt ist.

Fig. 3 zeigt eine räumliche Ansicht einer Schurre 20 in einer eingefahrenen Position, die einer Kübelförderposition entspricht, bevor der Förderkübel 200 in eine Entleerposition 430 bewegt wird.

Die Schurre 20 befindet sich in der Förderkübeltransportstellung, während der Förderkübel 200 im Schacht angehoben oder abgesenkt wird, bis sich der Kübel in der Aufnahmeposition 420 befindet. Mittels eines Aktuators 11, beispielsweise ein Hydraulikzylinder, kann die Schurre 20 zwischen eine eingefahrenen Förderkübeltransportstellung und einer ausgefahrenen Förderkübelentleerstellung bewegt werden, hier beispielhaft angedeutet durch Pfeil D.

Die Schurre in Fig. 3 weist einen Boden 23 und Seitenwände 24 auf. Ist die Schurre 20 teleskopierbar ausgeführt weisen sowohl die Schurrenbasis 22 einen Boden 23' und Seitenwände 24' wie auch das obere Schurrenteil 21 einen Boden 23" und Seitenwände 24" auf.

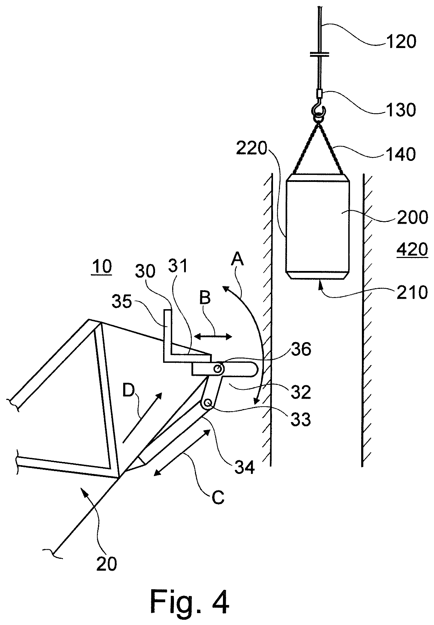

Das Aufnahmeelement 30 ist, wie in Fig. 4 dargestellt ist, beispielsweise auf eine Gleitelement 36 verschiebbar in Pfeilrichtung B auf einem Rotationsabschnitt 32 angeordnet.

Der Rotationsabschnitt 32 ist hier beispielsweise um eine Drehachse 33 mit einem Aktuator 34, hier beispielsweise ein Hydraulikzylinder, in Pfeilrichtung A rotierbar. Die Rotation in Pfeilrichtung A wird durch Ein- und Ausfahren des Hydraulikzylinder 34 in Pfeilrichtung C bewirkt. Andere Aktuatoren sind einsetzbar.

Fig. 4 zeigt eine Seitenansicht der erfindungsgemäßen Schurre 20 in Position analog Fig. 3.

Der Förderkübel 200 wird sofern notwendig in eine Aufnahmestellung in der Aufnahmeposition 420 gedreht, damit eine entsprechende Position des Förderkübels 200 gegeben ist, damit das Aufnahmeelement 30 eine haltende Verbindung mit dem Förderkübel 200 über das wenigstens eine Verbindungselement 210 herstellen kann.

Das wenigstens eine Verbindungselement 210 am unteren Ende des Förderkübels 200 zeigt in Richtung der Schurre 20. Dann wird die Schurre mit dem Aktor 11 in Pfeilrichtung D ausgefahren, bis das Vorsprungelement 31 (Gabel/Forke) auf Höhe des wenigstens einen Verbindungselements 210 des Förderkübels 200 ist.

Dieses kann auch durch eine teleskopierbare Schurre 20 erfolgen, indem die Schurre 20 zweigeteilt ausgeführt ist, wie dieses beispielsweise in Fig. 5 bis 7 dargestellt ist. Mittel eines nicht dargestellten Aktuators, bevorzugt eines Hydraulikzylinders, wird der obere Schurrenteil 21 relativ gegenüber der Schurrenbasis 22 bewegt in Pfeilrichtung E, bevorzugt ebenfalls bis das Vorsprungelement 31 auf Höhe des Verbindungselements 210 ist.

Anschließend wird das Aufnahmeelement 30 mit Vorsprungelement 31 (Gabel/Forke) in Pfeilrichtung B beispielsweise auf dem Gleitelement 36, ausgefahren (siehe auch Fig. 5) und das wenigstens eine Vorsprungelement 31 (Gabel/Forke) fädelt in das wenigstens eine Verbindungselement 210 des Förderkübels 200 ein, um eine Verbindung mit dem Förderkübel 200 herzustellen. Dieses erfolgt bevorzugt, bis das Auflageelement 35 mit der Seitenwand 220 des Förderkübels 200 in Berührung kommt.

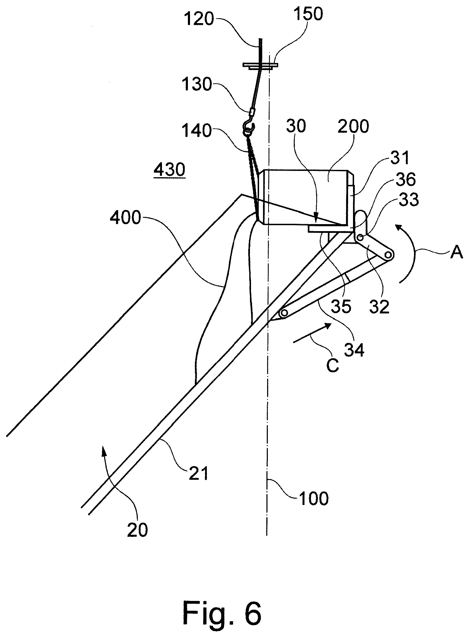

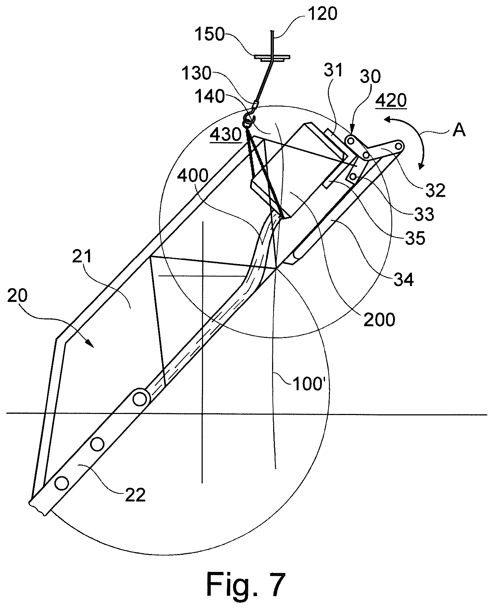

Anschließend wird der Rotationsabschnitt 32 mittels des Aktuators 34 um die Drehachse 33 gedreht in Pfeilrichtung A. Dieses erfolgt hier bevorzugt, in dem der Hydraulikzylinder 34 in Pfeilrichtung C ausfährt, wodurch das Aufnahmeelement 30 mit dem Vorsprungelement 31 um die Drehachse 33 schwenkt, siehe Fig 6 und Fig. 7. Der Förderkübel 200 ist dabei in Relation zur Schurre 20 vorteilhafterweise gehalten, zum einen durch den Eingriff des wenigstens einen Vorsprungelements 31 in das wenigstens eine Verbindungselement 210, und zum anderen durch das Auflageelement 35, das bevorzugt analog der Biegung der Seitenwand 220 des Förderkübels 200 geformt ist.

Vorteilhafter Weise wird zusätzlich die Schurre 20 weiter ausgefahren, so dass die Schurre 20 durch die Führungsseile 100 hindurchfährt, so dass der Haken 130 des Förderkübels 200 im Wesentlichen in der Ebenen der Führungsseile 100 verbleibt, wie dieses in Fig. 6 und 7 gezeigt ist, damit das Förderseil 120 nicht unnötig ausgelenkt wird, was zu einem Auf- oder Abtrommeln des Förderseils 120 führen würde, was entsprechend zu eine Höhenbewegung des im Schacht befindlichen Förderkübels 200' führen würde, was nachteilig wäre.

Durch die hohen Seitenwände 34, 34', 34" der Schurre 20, bzw. des oberen Schurrenteils 21 und der Schurrenbasis 22, kann von dem gelösten Boden/gelöstem Gestein/Material 400 nichts in den Förderturm oder Schacht herunterfallen, wenn das Material 400 anfängt sich aus dem Förderkübel heraus in die Schurre 20 zu bewegen.

An die Schurre 20 angeschlossen ist beispielsweise eine Förderrinne 250, ein Band oder ein Förderwagen.

In der in Fig 7 dargestellt, maximal gekippten Position wird der Förderkübel 200 ganz entleert. Ggf. kann das Leeren durch Schütteln der Förderkübels 200 beispielsweise über den Aktuator/Hydraulikzylinder 34 unterstützt werden, indem dieser im Wechsel ein- und ausfährt, wodurch eine vollständige Entleerung erreichbar ist.

Nach der vollständigen Entleerung des Förderkübels 200 wird dieser in umgekehrter Reihenfolge zurückgeschwenkt und das Aufnahmeelement 30 vom Förderkübel 200 durch ein horizontales zurückbewegen getrennt. Dadurch wird der Förderkübel wieder kontrolliert frei gegeben und er verbleit über der Schachtachse, um wieder leer in den Schacht abgesenkt zu werden, während der andere Förderkübel 200' gefüllt in die Aufnahmeposition 420' angehoben wird.

Hier wird der Förderkübel 200'mit einer zweiten erfindungsgemäßen Vorrichtung 10' entleert. A

Alternativ kann auch nur eine erfindungsgemäße Vorrichtung 10vorgesehen sein, wie dieses in Fig. 8 zusehen ist. Hier ist eine Drehvorrichtung 12 vorgesehen, die die erfindungsgemäß Vorrichtung 10 von der ersten Aufnahmeposition 420 zur zweiten Aufnahmeposition 420' schwenkt, bzw. die Schurre 20 mit dem daran angeordneten Aufnahmeelement 30. Das Verschwenken erfolgt dabei durch die Drehvorrichtung in Pfeilrichtung F.

Die Schurre 20 ist dabei bevorzugt auf einer Schiene 13 abgestützt, die die Stabilität der Vorrichtung 10 beim Verschwenken unterstützt.

Alternativ kann die Rotation in Pfeilrichtung A auch nur durch ein Bewegen der Schurre in Pfeilrichtung E erfolgen, wenn beispielsweise der Haken oder das Förderseil festgesetzt werden, so dass eine Rotationsbewegung erfolgen kann.

Weiterhin alternativ können die Schurre 20 und das Aufnahmeelement 30 mit seine dazu gehörigen Bestandteilen 31 bis 36 getrennt als zwei getrennte Vorrichtungen vorgesehen sein. Beispielsweise greift dabei das Aufnahmeelement 30 den Förderkübel 200 von einer Seite die Unterschiedlich ist von der Einfahrrichtung der Schurre 20 in den Bereich unterhalb des Förderkübels 200. Dabei kann beispielsweise zwischen den Angriffsrichtungen ein Winkel von 90° oder auch 180° bestehen.

## Patentansprüche

1. Vorrichtung zum Entleeren eines Förderkübels von beim Abteufen eines Schachts gelösten Gestein/Boden mit einer Schurre (20) zum Abfördern des aus dem Förderkübel (200, 200') entleerten Gestein/Boden/Material (400), die mittels eines Aktuators linear zwischen einer Förderkübeltransportstellung und einer Förderkübelentleerstellung verfahrbar ist, **dadurch gekennzeichnet, dass** ein Aufnahmeelement (30) für den Förderkübel (200, 200') vorgesehen ist, das zum Herstellen einer haltenden Verbindung zwischen Schurre (20) und Förderkübel (200,200') eingerichtet ist, dass das Aufnahmeelement (30) um eine Drehachse (33) drehbar an der Schurre (20) angeordnet ist, so dass das Aufnahmeelement (30) zwischen einer Aufnahmeposition (420) und einer Entleerposition (430) mittels eines zwischen der Schurre (20) und dem Aufnahmeelement (30) angeordneten Aktuators (34) verschwenkbar ist.

2. Vorrichtung nach Anspruch 1, **dadurch gekennzeichnet, dass** das Aufnahmeelement (30) einen Rotationsabschnitt (32) aufweist und einen Eingriffabschnitt mit einem Verbindungsabschnitt (210) des Förderkübels (200, 200') aufweist.

3. Vorrichtung nach Anspruch 2, **dadurch gekennzeichnet, dass** der Eingriffabschnitt wenigstens ein Vorsprungelements (31), Gabelelement oder Forkenelement ist.

4. Vorrichtung nach Anspruch 2 oder 3, **dadurch gekennzeichnet, dass** der Rotationsabschnitt (32) mittels eines Aktuators (34) verschwenkbar ist.

5. Vorrichtung nach Anspruch 4, **dadurch gekennzeichnet, dass** der Aktuators (34) ein Hydraulikzylinder ist.

6. Vorrichtung nach einem der Ansprüche 1 bis 5, **dadurch gekennzeichnet, dass** die Schurre (20) wenigstens zweiteilig aufgebaut ist, wobei ein Teil (21) gegenüber dem anderen Teil (22) relativ verfahrbar ist.

7. Vorrichtung nach Anspruch 6, **dadurch gekennzeichnet, dass** die Relativbewegung mittels eines Aktuators bewirkbar ist.

8. Vorrichtung nach Anspruch 7, **dadurch gekennzeichnet, dass** der Aktuators ein Hydraulikzylinder ist.

9. Vorrichtung nach einem der Ansprüche 1 bis 8, **dadurch gekennzeichnet, dass** Förderseil (120, 120') des Förderkübels (200, 200') beim Verschwenken des Aufnahmeelements (30) nicht auslenkbar ist.

10. Vorrichtung nach einem der Ansprüche 1 bis 9, **dadurch gekennzeichnet, dass** der Förderkübel (200, 200') um mehr als 90 Grad verschwenkbar ist.

11. Vorrichtung nach einem der Ansprüche 1 bis 10, **dadurch gekennzeichnet, dass** der Förderkübel verschwenkbar ist, bis er parallel zum Boden (23) der Schurre (20) ist.

12. Vorrichtung nach einem der Ansprüche 1 bis 11, **dadurch gekennzeichnet, dass** eine Drehvorrichtung (12) vorgesehen ist, mit der die Schurre (20) und/oder das Aufnahmeelement (30) horizontal zwischen zwei Aufnahmepositionen (420, 420') oder Entleerpositionen (430, 430') verschwenkbar ist.

## Claims

1. Apparatus for emptying a conveying bucket of rock/soil released during the sinking of a shaft, having a chute (20) which is for conveying away the rock/soil/material (400) emptied out of the conveying bucket (200, 200') and which can be displaced by means of an actuator linearly between a conveying bucket transport position and a conveying bucket emptying position, **characterized in that** a receiving element (30) for the conveying bucket (200, 200') is provided and is configured for producing a retaining connection between the chute (20) and conveying bucket (200, 200'), and **in that** the receiving element (30) is arranged on the chute (20) in a manner rotatable about a rotation axis (33) such that the receiving element (30) can be pivoted between a receiving position (420) and an emptying position (430) by means of an actuator (34) which is arranged between the chute (20) and the receiving element (30).

2. Apparatus according to Claim 1, **characterized in that** the receiving element (30) has a rotation portion (32) and has an engagement portion with respect to a connection portion (210) of the conveying bucket (200, 200').

3. Apparatus according to Claim 2, **characterized in that** the engagement portion is at least one projection element (31), fork-like element or fork element.

4. Apparatus according to Claim 2 or 3, **characterized in that** the rotation portion (32) is pivotable by means of an actuator (34).

5. Apparatus according to Claim 4, **characterized in that** the actuator (34) is a hydraulic cylinder.

6. Apparatus according to one of Claims 1 to 5, **characterized in that** the chute (20) is constructed in at least two pieces, wherein one piece (21) can be displaced in relative terms with respect to the other piece (22).

7. Apparatus according to Claim 6, **characterized in that** the relative movement can be brought about by means of an actuator.

8. Apparatus according to Claim 7, **characterized in that** the actuator is a hydraulic cylinder.

9. Apparatus according to one of Claims 1 to 8, **characterized in that** the conveying cable (120, 120') of the conveying bucket (200, 200') is not able to be redirected when the receiving element (30) is pivoted.

10. Apparatus according to one of Claims 1 to 9, **characterized in that** the conveying bucket (200, 200') can be pivoted by more than 90 degrees.

11. Apparatus according to one of Claims 1 to 10, **characterized in that** the conveying bucket can be pivoted until it is parallel with the base (23) of the chute (20).

12. Apparatus according to one of Claims 1 to 11, **characterized in that** a rotation apparatus (12) by way of which the chute (20) and/or the receiving element (30) can be pivoted horizontally between two receiving positions (420, 420') or emptying positions (430, 430') is provided.

## Revendications

1. Dispositif pour vider une benne d'extraction de roche/sol détaché lors du creusement d'un puits, avec une goulotte (20) pour évacuer la roche/sol/matériau (400) vidé de la benne d'extraction (200, 200'), qui peut être déplacée linéairement au moyen d'un actionneur entre une position de transport de benne d'extraction et une position de vidage de benne d'extraction, **caractérisé en ce qu'**il est prévu un élément de réception (30) pour la benne d'extraction (200, 200'), qui est adapté pour établir une liaison de maintien entre la goulotte (20) et la benne d'extraction (200, 200'), **en ce que** l'élément de réception (30) est agencé sur la goulotte (20) de manière à pouvoir tourner autour d'un axe de rotation (33), de telle sorte que l'élément de réception (30) peut pivoter entre une position de réception (420) et une position de vidage (430) au moyen d'un actionneur (34) agencé entre la goulotte (20) et l'élément de réception (30).

2. Dispositif selon la revendication 1, **caractérisé en ce que** l'élément de réception (30) présente une section de rotation (32) et présente une section d'engagement avec une section de liaison (210) de la benne d'extraction (200, 200').

3. Dispositif selon la revendication 2, **caractérisé en ce que** la section d'engagement est au moins un élément en saillie (31), un élément en fourche ou un élément en fourchette.

4. Dispositif selon la revendication 2 ou 3, **caractérisé en ce que** la section de rotation (32) peut pivoter au moyen d'un actionneur (34).

5. Dispositif selon la revendication 4, **caractérisé en ce que** l'actionneur (34) est un vérin hydraulique.

6. Dispositif selon l'une quelconque des revendications 1 à 5, **caractérisé en ce que** la goulotte (20) est construite au moins en deux parties, une partie (21) étant déplaçable relativement par rapport à l'autre partie (22).

7. Dispositif selon la revendication 6, **caractérisé en ce que** le mouvement relatif peut être effectué au moyen d'un actionneur.

8. Dispositif selon la revendication 7, **caractérisé en ce que** l'actionneur est un vérin hydraulique.

9. Dispositif selon l'une quelconque des revendications 1 à 8, **caractérisé en ce que** le câble d'extraction (120, 120') de la benne d'extraction (200, 200') ne peut pas être dévié lors du pivotement de l'élément de réception (30).

10. Dispositif selon l'une quelconque des revendications 1 à 9, **caractérisé en ce que** la benne d'extraction (200, 200') peut pivoter de plus de 90 degrés.

11. Dispositif selon l'une quelconque des revendications 1 à 10, **caractérisé en ce que** la benne d'extraction peut pivoter jusqu'à être parallèle au fond (23) de la goulotte (20).

12. Dispositif selon l'une quelconque des revendications 1 à 11, **caractérisé en ce qu'**il est prévu un dispositif de rotation (12) permettant de faire pivoter horizontalement la goulotte (20) et/ou l'élément de réception (30) entre deux positions de réception (420, 420') ou de vidage (430, 430').
